# EUROPEAN PATENT SPECIFICATION

(11) **EP 2 482 481 B1**
(45) Date of publication and mention of the grant of the patent: **16.07.2014**
(21) Application number: 11290038.6
(22) Date of filing: 21.01.2011
(51) Int. Cl.: H04J 14/08, H04J 14/02

(54) **Method of optical data transmission**
Verfahren zur optischen Datenübertragung
Procédé pour transmission optique de données

(43) Date of publication of application: 01.08.2012
(73) Proprietor: Alcatel Lucent, 75007 Paris (FR)
(72) Inventor: Pointurier, Yvan, 91300 Massy (FR); Simonneau, Christian, 94800 Villejuif (FR)
(74) Representative: Mildner, Volker

(56) References cited:
- EP-A1- 1 161 014
- US-A1- 2002 186 674
- Zirngibl, Martin: "New Networking Architectures and Technologies", http://yuba.stanford.edu/lb/program.html Stanford Workshop on Load-Balancing, 19 May 2004 (2004-05-19), pages 1-32, XP002635663, Stanford, USA Retrieved from the Internet: URL:http://yuba.stanford.edu/lb/zirngibl.p pt [retrieved on 2011-05-06]
- PAPADIMITRIOU G I ET AL: "Optical Switching: Switch Fabrics, Techniques, and Architectures", JOURNAL OF LIGHTWAVE TECHNOLOGY, IEEE SERVICE CENTER, NEW YORK, NY, US, vol. 21, no. 2, 1 February 2003 (2003-02-01), pages 384-405, XP011064641, ISSN: 0733-8724

## Description

In optical networks, data can be transmitted using optical signals at different wavelengths, which is known as wavelength division multiplexing (WDM). At each wavelength, an optical signal transports a data signal. Such data signals may be time division multiplex (TDM) signals, which consist of timeslots of constant time length. The TDM data signal contains within a timeslot a data frame.

Furthermore, it has been proposed to transmit header information related to the data frames of the different TDM data signals within an additional TDM header signal, which is carried by an additional optical TDM signal at an additional wavelength. Within its timeslots, the TDM header signal contains header information frames, which provide routing information related to the data frames of the TDM data signals.

The TDM header signal consists of timeslots, whose duration is preferably equal to the duration of the timeslots of the TDM data signals. The routing information contained in a header information frame indicates, whether an optical network element shall drop a related data frame of a TDM data signal or whether the optical network element shall let the data frame transit through the optical network element further on to other optical network elements.

Optical network elements are connected in a ring structure. One network element, called optical hub, generates the optical TDM signals carrying the respective TDM data signals, as well as the optical signal carrying the TDM header signal. The network element transmits these signals along the optical ring. The optical TDM signals transit on the optical ring from the hub along a series of network nodes, and are finally received at the network element again.

A network node terminates the optical TDM signal carrying the TDM header signal. Furthermore, a network node terminates a subset of the optical TDM signals carrying TDM data signals. Each network node terminates only such optical TDM signals carrying TDM data signals, which are transmitted at predefined wavelengths. Each node is assigned a set of predefined wavelengths, for determining, which optical TDM signals carrying TDM data signals the node may terminate. The node then may drop data frames from the TDM data signals of the terminated optical TDM signals. The node may furthermore add data frames to the TDM data signals of the terminated optical TDM signals, which then in turn are used to generate new optical TDM signals. The new optical TDM data signals are then transmitted further on along the optical ring to a next node. Optical TDM signals, which are received by a node at wavelengths, that are not from the wavelengths assigned to the node, are allowed by the node to transit further on along the optical ring without termination.

Since the routing information contained within the header information frames of the TDM header signal allows an optical network node to decide, whether a termination an optical TDM signal containing a TDM data signal is necessary, or whether the optical TDM signal may transit through the optical network element without a termination being necessary, the optical network node does not need to terminate all those optical TDM signals, which are transmitted at the assigned wavelengths, but at least only the optical TDM signal carrying the TDM header signal.

The document EP 1161014 A1 discloses an optical communication ring network, in which nodes communicate in pairs defining bi-directional links. Under normal conditions, the nodes communicate on a respective working arc path, wherein data is transmitted as a respective first wavelength on a first carrier and a respective second wavelength on a second carrier of the network. In a complimentary arc that is complimentary to the working arc, the second wavelength is reserved on the first carrier and the first wavelength is reserved on the second carrier for protection and used in case of failures. Only the failed wavelength channels are rerouted. The operating protection is performed at the channel level.

The document US 2002/0186674 A1 discloses a transmission in an optical ring network, wherein for protection purposes an optical signal is rerouted in an opposite direction along an optical ring.

The document "Zirngibl, Martin: 'New Networking Architectures and Technologies', http://yuba.stanford.edu/Ib/program.html Stanford Workshop on Load-Balancing, 19 May 2004 (2004-05-19), pages 1-32, XP002635663, Stanford, USA" discloses a method of optical data protection, wherein unused time slots are filled with dummy packets.

The document "PAPADIMITRIOU G I ET AL: 'Optical Switching: Switch Fabrics, Techniques, and Architectures', JOURNAL OF LIGHTWAVE TECHNOLOGY, IEEE SERVICE CENTER, NEW YORK, NY, US, vol. 21, no. 2, 1 February 2003 (2003-02-01), pages 384-405, XP011064641, ISSN: 0733-8724" discloses an optical WBM data transmission system, wherein in the case of absence of useful payload dummy packets are introduced.

### Summary

A method of optical data transmission is proposed.

A number of optical network nodes are connected by a first optical ring and a second optical ring. The proposed method comprises different steps carried out at a network node.

On a first optical ring, optical TDM signals are received from a first optical network element in a first transmission direction. A number of N optical TDM signals carrying N respective TDM data signals are received at N respective wavelengths, wherein the TDM data signals are divided into timeslots containing data frames. Furthermore, a further optical TDM signal carrying a TDM header signal is received at a further wavelength, wherein the TDM header signal is divided into timeslots containing header information frames. The further optical TDM signal is terminated, and the TDM header signal is recovered. Furthermore, a new TDM header signal is generated, and a new further optical TDM signal is generated at the further wavelength. Furthermore, a number of M of the N optical TDM signals are terminated at their M respective wavelengths, wherein M is a number smaller than N, using the header information frames of the recovered TDM header signal. A number of M new optical TDM signals are generated at the M respective wavelengths.

The method comprises further steps in a first configuration state of the optical network node. The new optical TDM signals and the new further optical TDM signal are transmitted on the first optical ring to a second optical network element in the first transmission direction. Upon detecting a transmission failure located between the optical network node and the second network element or located at the second network element, it is being switched from the first configuration state to a second configuration state.

The method comprises further steps in the second configuration state of the optical network node. Header information frames are inserted in the new TDM header signal header information frames, indicating that data frames of the remaining N-M optical TDM signals contain dummy data. Furthermore, the M optical TDM signals, the remaining N-M optical TDM signals and the new further optical TDM signals are transmitted on the second optical ring to the first node in a second transmission direction opposite to the first transmission direction.

By transmitting the optical TDM signals, which were received at the respective N wavelengths on the first optical ring from the first node, back on the second optical ring to the first node, it is achieved, that into the second optical ring optical TDM signals are inserted at the N wavelengths and received by the other nodes residing along the second optical ring. Thus, if one or more of these other nodes amplify these optical TDM signals, using optical amplifiers such as an erbium doped fiber amplifier (EDFA), these optical amplifiers will receive optical signals at all of these N wavelengths. Therefore, the optical amplifiers will not face load problems at one of the N wavelengths, since the signal power is kept above a minimum power level for these N wavelengths. Thus, the optical amplifiers will not start to generate any transient signal components, which could interfere with any of the optical TDM signals. Therefore, the N optical TDM signals may be used for optical data transmission in the second transmission direction by network nodes residing along the second optical ring.

Furthermore, by inserting into the new TDM header signal header information frames, which indicate that the data frames of the N optical TDM signals contain dummy data, the following is achieved: If the data frames of the remaining N-M optical data signals were not marked as data frames containing dummy data, then other network nodes residing at the second optical ring could try to recover these data frames from these N-M optical data frames. But a proper recovery of these data frames from their optical TDM signals may not be possible for the reason, that the transmitted optical signals are subject to signal impairments. The longer the distance is, a signal propagates through an optical ring, the more the impairments may affect the optical signal. One impairment may be an accumulation of noise signals, caused by optical signal amplifiers of the optical nodes, which in turn could decrease the optical signal to noise ratio (OSNR) of the received optical signal. Another impairment could be signal attenuation, causing an optical signal to have a power level below a certain power threshold. The longer the distance is that an optical signal propagates through an optical fiber, the higher the signal attenuation is. For these reasons, it is not feasible to let an optical signal propagate through the optical rings for a too great distance without regenerating this optical signal, by means of optical-to-electrical conversion, signal regeneration in the electrical domain and electrical to optical conversion, which is called 3R-regeneration.

The different N optical TDM signals are inserted by the optical network element called optical hub into the first optical ring. If the N-M optical TDM signals propagate further on without signal regeneration, the signal impairments might become too severe for being able to recover and decode data frames properly from these signals. Therefore, by marking the data frames of the N-M optical TDM signals as dummy data frames, other network nodes will refrain from recovering any of these data frames, and thus these other network nodes will not take the risk of recovering and decoding erroneous data frames. Even furthermore, since the data frames of the N-M optical data signals are marked as dummy data, network nodes residing along the second optical ring may replace dummy data frames within these N-M optical data signals by real data frames, for transmitting data along the second optical ring in the second transmission direction.

Thus, a data transmission in the second transmission direction along the second optical ring is enabled. Therefore, the optical network elements may still transmit data between them, although a transmission failure splitting up the ring network occurs.

### Brief description of the Figures

Figures 1a, 1b and 1c show an optical ring network in different states.
Figure 2 shows different optical TDM signals.
Figure 3 shows a proposed optical node.

### Description of embodiments

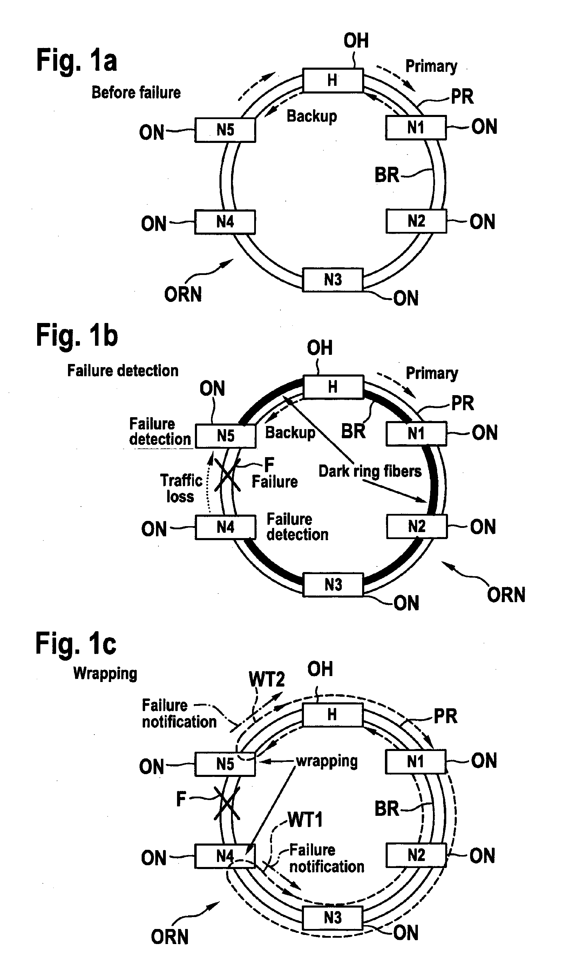

Figure 1a shows an optical ring network ORN. A number of optical network elements OH, ON are connected by two optical rings, a primary ring PR and a backup ring BR. An optical ring PR, BR consists of a number of optical fibers connecting a number of optical network elements OH, ON in a ring structure. One optical network element is an optical hub OH, other optical network elements are optical network nodes ON.

An optical hub OH generates a number of N optical TDM signals carrying TDM data signals at respective wavelengths, and transmits these optical TDM signals along a primary optical ring PR in a first transmission direction. Furthermore, the optical hub generates a further optical TDM signal carrying a TDM header signal at a further wavelength, and transmits this further optical TDM signal along the primary optical ring PR in the first transmission direction.

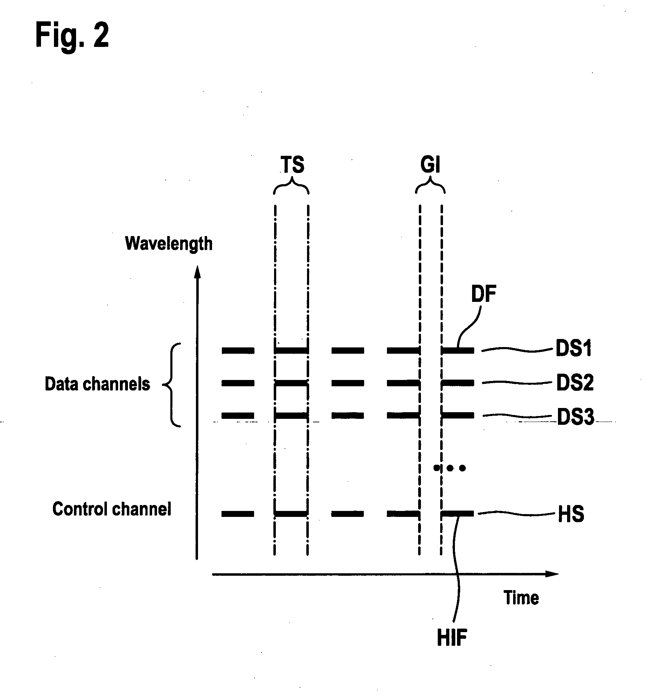

Figure 2 illustrates the transmission of TDM data signals DS1, DS2, DS3 by means of different optical time division multiplex signals at different wavelengths, as well as transmission of a header signal HS along a control channel on the further wavelength. For illustrational purpose, the number N of TDM data signals is chosen to N=3 in this example, which is not to be construed as a limitation.

At each wavelength, an optical TDM signal transports a data signal DS1, DS2, DS3. The data signals DS1, DS2, D3 consist of timeslots TS of constant time length. The TDM data signals contain within the timeslots TS data frames DF.

Header information related to the data frames DF of the different TDM data signals DS3 , DS, DS3 is transmitted within the TDM header signal HS. Within its timeslots TS, the TDM header signal HS contains header information frames HIF, which provide routing information related to the data frames DF of the TDM data signals DS1, DS2, DS3. Preferably, the duration of the time timeslots TS of the header signal HS is equal to the duration of the time timeslots TS of the data signals DS1, DS2, DS3. Alternatively, the duration of the time timeslots TS of the header signal HS is different to the duration of the time timeslots TS of the data signals DS1, DS2, DS3. Furthermore, the frames HIF of the header signal HS do not have to be separated by a guard interval G1.

The data signals DS1, DS2, DS3 are transmitted by respective optical TDM signal at respective different wavelengths. The data signals DS1, DS2, DS3 are synchronous to each other, such that their timeslots TS have same duration lengths, and such that their timeslots TS are synchronous to each other.

The header signal HS is transmitted by on optical TDM signal at a wavelength different to the wavelengths of the data signals DS1, DS2, DS3. The timeslots TS of the header signal HS have the same time length as the timeslots TS of the data signals DS1, DS2, DS3. The header signal HS is preferably synchronous to the data signals DS1 , DS2, DS3. Alternatively, the header signal HS is not synchronous to the data signals DS1, DS2, DS3. Within a header information frame HIF of the header signal HS, routing information is provided, which indicates to an optical node or an optical network device, whether the optical node or the optical network device has to drop one or more data frames DF of one ore more data signals DS1, DS2, DS3. Furthermore, the routing information indicates, whether the optical node or the optical network device shall let a data frame DF transit through the node or the device to the next node or device on the optical ring OR shown in Figure 1 a.

The routing information of a header information frame HIF related to a data frame DF of a data signal DS1, DS2, DS3 does not have to be transmitted in the exact same timeslot TS, but may preferably be transmitted in a timeslot TS, which precedes the timeslot TS of the data frame DF that is to be dropped or transmitted further on.

The timeslots TS of the data signals DS1, DS2, DS3 are separated by a guard interval GI. The optical nodes ON add data for data transmission, by adding a data frame DF into a data signal DS1, DS2, DS3. For determining, into which timeslot TS of a data signal DS1, DS2, DS3 the optical node may insert a data frame DF, the optical node analyses the routing information contained within the header information frames HIF of the header signal HS. Thus, the optical node determines, which timeslot TS of a data signal DS1, DS2, DS3 is empty, which then may be used for inserting a data frame DF.

Coming back to Figure 1a, the following explanations have to be considered. The hub generates optical TDM signals carrying TDM data signals at all of the N wavelengths, as well as the optical TDM signal carrying the TDM header signal.

A node ON terminates the optical TDM signal carrying the TDM header signal. Furthermore, a node ON does not terminate all of the N optical TDM signals carrying TDM data signals, but at maximum only a number of J optical TDM signals carrying TDM data signals, wherein J is a number smaller than N. The node may terminate all of the J optical TDM signals, but a node may also terminate less than the J optical TDM signals, depending on whether the terminated TDM header signal indicates that data frames are to be dropped from one or more of the J optical TDM signals, and depending on whether the node wants to insert data frames into one or more of the J optical TDM signals.

The remaining N-J optical TDM signals are not terminated, but transit through the node without being terminated. Each node may be configured to be able to terminate a different set of J optical TDM signals at different respective J wavelengths.

Since it may be the case that an optical TDM signal is not terminated by any of the nodes ON, the optical hub OH terminates all optical TDM signal carrying TDM data signals and also the optical TDM signal carrying the TDM header signal, when receiving these signals on the primary ring after one circumference of these optical TDM signals. Furthermore, the optical hub OH generates new optical TDM signals and transmits these signals along the primary ring in the first transmission direction. The hub OH may drop data frames from a TDM data signal and/or may add data frames to a TDM data signal.

In the case of no failure detection, the nodes ON transmit data on the primary ring PR only.

The optical nodes may use optical amplifiers, such as erbium doped fibre amplifier (EDFA) at their inputs and/or their outputs for amplifying the optical TDM signals. Since the hub OH inserts into the optical ring optical TDM signals carrying TDM data signals at all of the N wavelengths, as well as an optical TDM signal carrying the TDM header signal at the further wavelength, the optical amplifiers are loaded at all of these wavelengths. If an optical amplifier was not loaded at all of these wavelengths, the optical amplifier could start to generate transient signal components, which could interfere with any of the optical TDM signals.

The hub OH furthermore generates optical TDM signals containing TDM data signals at the N wavelengths and an optical TDM signal carrying a TDM header signal at the further wavelength, and transmits them into the backup ring BR in a second transmission direction, which is opposite to the first transmission direction. These TDM data signals contain data frames containing dummy data, and these data frames are marked as frames containing dummy data in the header information frames of the TDM header signal. By doing so, the hub OH ensures, that any optical amplifiers placed at the nodes ON along the backup ring are always loaded above a minimum power level at the N wavelengths and the further wavelength.

Figure 1b shows the optical ring network ORN in the case of a failure F. The failure is located on the optical rings PR, BR between a node N4 and a node N5. The failure F is such, that no optical signals can be transmitted on the optical rings PR, BR between the nodes N4 and N5, thus causing a traffic loss.

Furthermore, since node N5 is only able to generate J optical TDM signals at respective J wavelengths, the primary ring PR does not contain any optical TDM signals at the remaining N-J wavelengths. Thus, optical amplifiers placed at the node N5 along the primary ring PR may cause a generation of transient optical signal components, as previously described above, which would degrade a data transmission from the node N5 to the hub along the primary ring PR.

Furthermore, since the node N4, N3, N2, N1 are only able to generate optical TDM signals at their respective J wavelengths, the backup ring BR does not contain any optical TDM signals at the remaining wavelengths. Thus, optical amplifiers placed at the nodes N4, N3, N2, N1 along the primary ring PR may cause a generation of transient optical signal components, as previously described above, which would degrade a data transmission from the node N4 along the node N3, N2 and N1 to the hub along the backup ring PR.

The node N4 detects, that a failure occurred between itself and the next node N5 on the primary ring. The node may do so in two different ways.

A first way is, to detect at the node N4, that no signal is received on the backup ring Br from the node N5. This may be done, by detecting a loss of light on the backup ring BR at the node N4.

A second way is, to receive at the node N4 a failure notification message from the node N5 along the primary ring. The node N5 may detect a loss of light on the primary ring and then initiate the sending of the failure notification message to the node N4 within the TDM header signal generated by the node N5 and transmitted along the primary ring. Since the optical TDM signal carrying the TDM header signal is regenerated at each optical network element OH, ON, this signal is likely to reach the node N4 with a sufficient signal quality.

The actions taken by the nodes N4 and N5 upon detecting the failure F are illustrated with respect to Figure 1 c.

Of the N optical TDM signals carrying TDM data signals received at the node N4 from the node N3 on the primary ring PR, the node N4 wraps at least those N-J optical TDM signals onto the backup ring BR, which have respective N-J wavelengths, at which the node N4 is not able to generate an optical TDM signal. This wrapping is performed, by transmitting these N-J optical TDM signals on the backup ring BR to the node N3 in the second transmission direction opposite to the first transmission direction. Furthermore, the node N4 may terminate one or more of those J optical TDM signals, which have respective wavelengths, at which the node N4 is able to generate optical TDM signals. For each terminated optical TDM signal of the J optical TDM signals, a new optical TDM signal is generated by the node N4 at the respective wavelength, and transmitted into the backup ring BR in the second transmission direction. Those optical TDM signals of the J optical TDM signals, which are not terminated by the node N4, are wrapped onto the backup ring BR at the node N4, by transmitting them into the backup ring BR in the second transmission direction to the node N3. The node N4 furthermore terminates the optical TDM signal carrying the TDM header signal, that is received from the node N3 on the primary ring. The node N4 generates a new TDM header signal and a new optical TDM signal carrying the new TDM header signal, and transmits also this new optical TDM signal carrying the new TDM header signal into the backup ring BR in the second transmission direction.

The optical TDM signals transmitted by the node N4 into the backup ring BR are indicated in Figure 1c as wrapped traffic WT1.

The node N4 inserts in the new generated TDM header signal header information frames, which indicate, that those optical TDM signals, which were transmitted into the backup ring BR without previously being terminated at the node N4, contain dummy data. Thus, other nodes N3, N2, N1 may consider the data frames of these optical TDM signals for data transmission.

Furthermore, the node N4 sends a failure notification to the other network elements N3, N2, N1, H, indicating that it is not connected any more to its next node N5 in the first transmission direction. This failure notification is preferably sent within header information frames of the TDM header signal. The network elements N3, N2, N1, H are then able to derive from this failure notification, that a data transmission beyond the node N4 in the first transmission direction is not possible any more. Thus, for reaching network elements, that are located from their perspective beyond the node N4 in the first transmission direction, the nodes N3, N2, N1, H use the backup ring BR for transmitting data to such network elements. For example, the node N3 uses the backup ring BR, for transmitting data to the node N2.

In this example, the node N4 takes the actions described above, in the case of a failure on the optical rings PR, BR. The node N4 may take the same actions, in the case of a failure of the node N5, causing a loss of light on the optical rings PR and BR.

The node N5 takes actions, for enabling an improved data transmission in the case of the failure F. The node N5 may either detect the failure F, by detecting a loss of light on the primary ring PR, or by analysing a failure notification received from another node, such as the node N4.

The node N5 switches to receiving optical TDM signals from the backup ring BR in the second transmission direction instead of receiving optical TDM signals on the primary ring PR in the first transmission direction.

Of the N optical TDM signals carrying TDM data signals received at the node N5 from the hub H on the backup ring BR, the node N5 wraps at least those N-J optical TDM signals onto the primary ring PR, which have respective N-J wavelengths, at which the node N5 is not able to generate an optical TDM signal. This wrapping is performed, by transmitting these N-J optical TDM signals on the primary ring PR to the hub H in the first transmission direction. Furthermore, the node N5 may terminate one or more of those J optical TDM signals, which have respective wavelengths, at which the node N5 is able to generate optical TDM signals. For each terminated optical TDM signal of the J optical TDM signals, a new optical TDM signal is generated by the node N5 at the respective wavelength, and transmitted into the primary ring PR in the first transmission direction. Those optical TDM signals of the J optical TDM signals, which are not terminated by the node N5, are wrapped onto the primary ring PR at the node N5, by transmitting them into the primary ring PR in the first transmission direction to the hub H. The node N5 furthermore terminates the optical TDM signal carrying the TDM header signal, that is received from the hub H on the backup ring BR. The node N5 generates a new TDM header signal and a new optical TDM signal carrying the new TDM header signal, and transmits also this new optical TDM signal carrying the new TDM header signal into the primary ring PR in the first transmission direction.

The optical TDM signals transmitted by the node N5 into the primary ring PR are indicated in Figure 1c as wrapped traffic WT2.

The node 5 inserts in the new generated TDM header signal header information frames, which indicate, that those optical TDM signals, which were transmitted into the primary ring PR without previously being terminated at the node N5, contain dummy data. Thus, other network elements H, N1, N2, N3 may consider the data frames of these optical TDM signals for data transmission.

Furthermore, the node N5 sends a failure notification to the other network elements H, N1, N2, N3, N4, indicating that it is not connected any more to its previous node N4 in the first transmission direction. This failure notification is preferably sent within header information frames of the TDM header signal. The network elements H, N1, N2, N3, N4 are then able to derive from this failure notification, that a data transmission beyond the node N4 in the first transmission direction is not possible any more. Thus, for reaching network elements, that are located from their perspective beyond the node N4 in the first transmission direction, the nodes N3, N2, N1, H use the backup ring BR for transmitting data to such network elements. For example, the node N3 uses the backup ring BR, for transmitting data to the node N5.

In this example, the node N5 takes the actions described above, in the case of a failure on the optical rings PR, BR. The node N5 may take the same actions, in the case of a failure of the node N4, causing a loss of light on the optical rings PR and BR.

By taking actions at the node N5 as described above, the node N5 enables a data transmission between all of the network elements H, N1, N2, N3, N4, N5, although the optical rings BR and PR are subject to a failure between the nodes N4 and N5. Furthermore, the node N5 ensures, that optical TDM signals are transmitted at all N wavelengths, thus guaranteeing a proper operation of optical amplifiers placed at the network elements H, N1, N2, N3, N4.

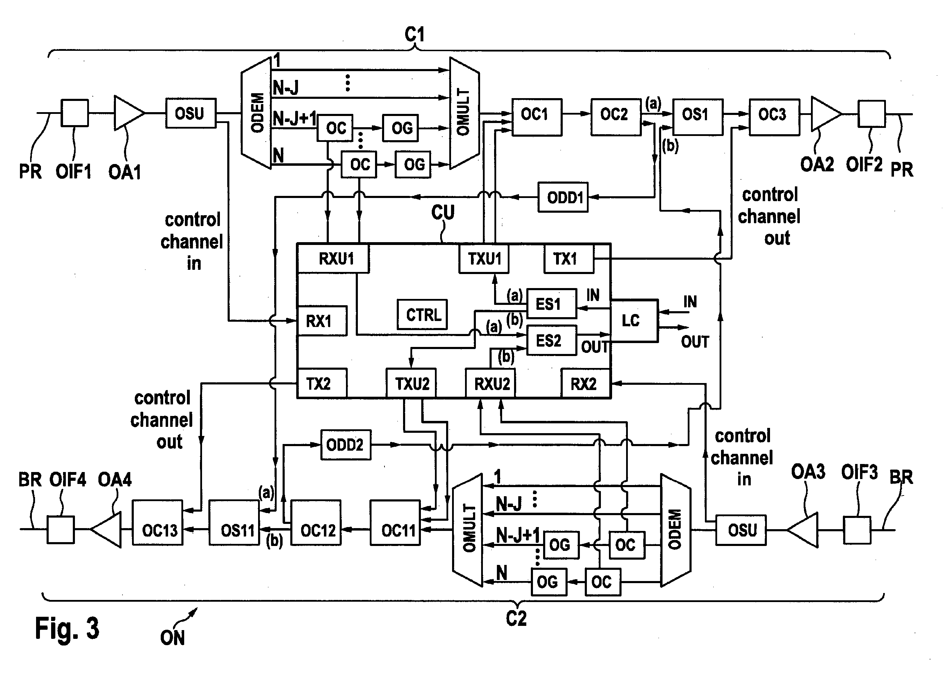

Figure 3 shows a block diagram of the different components of one of the nodes ON shown in the Figures 1a, 1b , 1c.

The node ON contains two chains C1, C2 of optical elements, as well as a control unit CU.

The chain C1 starts with an optical interface OIF1, at which optical TDM signals are received from the primary ring in the first transmission direction. The signals are amplified at an optical amplifier OA1.

An optical splitting unit OSU splits the optical TDM signal carrying the TDM header signal from the optical TDM signals carrying the TDM data signals. The optical splitting unit provides the optical TDM signal carrying the TDM header signal to a receiver RX1, which is part of the control unit CU. The receiver recovers the TDM header signal and provides it to a controller CTRL of the control unit CU.

The optical splitting unit OSU provides the optical TDM signals carrying the TDM data signals to an optical demultiplexer ODEM, which splits the N optical TDM signals onto N different fibers. The N-J optical TDM signals, that are not to be terminated at the node ON, are provided to optical fibers 1, ..., N-J, that are directly connected to an optical multiplexing unit OMULT. Those J optical TDM signals, that may be terminated by the node ON, are provided to J fibers N-J+1, ..., N, that contain respective optical couplers OC, The optical couplers OC provide these J optical TDM signals to a reception unit RXU1 of the control unit CU. The reception unit RXU1 contains one or more receivers, not shown explicitly in the Figure 3, for recovering J TDM data signals from the J optical TDM signals, which then are provided to the controller CTRL.

The optical couplers OC furthermore provide the J optical data signals to respective optical gates OG, which in turn are connected to the optical multiplexing unit OMULT.

The optical multiplexing unit OMULT multiplexes the N optical TDM signals into a set of signals, and provides this set to an optical coupler OC1. The optical coupler OC1 couples this set of signals with up to J optical TDM signals, that are generated by a transmission unit TXU1 of the control unit CU. The transmission unit TXU1 may contain one or more transmitters.

An optical coupler OC2 receives the signals from the optical coupler OC1, and provides these signals to an optical switch OS1 of the chain C1, and to an optical switch OS11 of the chain C2. Preferably, the optical coupler OC2 and the optical switch OS1 are connected by an optical delay element ODD1. By delaying at the optical delay element ODD1 the N optical TDM signals carrying the N TDM data signals with respect to the optical TDM signal carrying the new TDM header signal generated by the transmitter TX2, a synchronisation of the N optical TDM signals carrying the N TDM data signals to the optical TDM signal carrying the new TDM header signal is enabled.

The optical switch OS1 receives the signals from the optical coupler OC2, as well as signals from an optical coupler OC12. The optical switch OS1 switches either signals coming from the optical coupler OC2 or from the optical coupler OC12 to an optical coupler OC3.

The optical coupler OC3 couples the signals received from the optical switch OS1 with an optical TDM signal that carries a new TDM header signal, which is generated by a transmitter TX1 of the control unit CU.

The optical coupler OC3 provides the coupled signals to an optical amplifier OA2, which in turn provides these signals to an optical interface OIF2, for transmitting these signals along the primary ring in the first transmission direction.

The chain C2 is of equivalent structure to the chain C1. The chain C2 starts with an optical interface OIF3, at which optical TDM signals are received from the backup ring in the second transmission direction. The signals are amplified at an optical amplifier OA3.

An optical splitting unit OSU splits the optical TDM signal carrying the TDM header signal from the optical TDM signals carrying the TDM data signals. The optical splitting unit provides the optical TDM signal carrying the TDM header signal to a receiver RX2, which is part of the control unit CU. The receiver RX2 recovers the TDM header signal and provides it to the controller CTRL of the control unit CU.

The optical splitting unit OSU provides the optical TDM signals carrying the TDM data signals to an optical demultiplexer ODEM, which splits the N optical TDM signals onto N different fibers. The N-J optical TDM signals, that are not to be terminated at the node ON, are provided to optical fibers 1, ..., N-J, that are directly connected to an optical multiplexing unit OMULT. Those optical TDM signals, that may be terminated by the node ON, are provided to J fibers N-J+1, ..., N, that contain respective optical couplers OC. The optical couplers OC provide these J optical TDM signals to a reception unit RXU2 of the control unit CU. The reception unit RXU2 contains one or more receivers, not shown explicitly in the Figure 3, for recovering J TDM data signals from the J optical TDM signals, which then are provided to the controller CTRL.

The optical couplers OC furthermore provide the J optical data signals to respective optical gates OG, which in turn are connected to the optical multiplexing unit OMULT.

The optical multiplexing unit OMULT multiplexes the N optical TDM signals into a set of signals, and provides this set to an optical coupler OC11. The optical coupler OC11 couples this set of signals with up to J optical TDM signals, that are generated by a transmission unit TXU2 of the control unit CU. The transmission unit TXU2 may contain one or more transmitters.

An optical coupler OC12 receives the signals from the optical coupler OC11,- and provides these signals to an optical switch OS11 of the chain C2, and to the optical switch OS1 of the chain C1. Preferably, the optical coupler OC12 and the optical switch OS1 are connected by an optical delay element ODD2. By delaying at the optical delay element ODD2 the N optical TDM signals carrying the N TDM data signals with respect to the optical TDM signal carrying the new TDM header signal generated by the transmitter TX1, a synchronisation of the N optical TDM signals carrying the N TDM data signals to the optical TDM signal carrying the new TDM header signal is enabled.

The optical switch OS11 receives the signals from the optical coupler OC12, as well as signals from the optical coupler OC2. The optical switch OS11 switches either signals coming from the optical coupler OC12 or from the optical coupler OC2 to an optical coupler OC13.

The optical coupler OC13 couples the signals received from the optical switch OS11 with an optical TDM signal that carries a new TDM header signal, which is generated by a transmitter TX2 of the control unit CU.

The optical coupler OC13 provides the coupled signals to an optical amplifier OA4, which in turn provides these signals to an optical interface OIF4, for transmitting these signals along the backup ring in the second transmission direction.

The controller CU contains furthermore at least one line card LC, that receives data from a lower protocol layer and transmits data at a lower protocol layer. The line card LC encapsulates data from the lower protocol layer into data frames, and provides these data frames to an electrical switch ES1. The switch ES1 switches these data frames either to the transmission unit TXUI, for transmitting the data packets along the primary ring, or to the transmission unit TXU2, for transmitting the data packets along the backup ring.

The line card LC receives data frames from an electrical switch ES2 and decapsulates data of the lower protocol layer from these data frames. The electrical switch ES2 provides either data frames received by the receiving unit RXU1 from the primary ring to the line card LC, or data frames received by the receiving unit RXU2 from the backup ring to the line card LC.

An optical gate OG suppresses a transmission of an optical signal during a timeslot, in the case that a data frame is inserted into that time slot by the node ON.

In a first configuration state of a node ON, in which the node ON does not detect any transmission failure on the optical rings, the switch OS1 switches the signals coming from the optical coupler OC2 to the optical coupler OC3. Furthermore, the optical switch OS11 switches the signals coming from the optical coupler OC12 to the optical coupler OC13. Even furthermore, the electrical switch ES1 switches data frames from the line card LC to the transmission unit TXU1, and the switch ES2 switches data frames coming from the reception unit RXU1 to the line card LC. The different switches are configured by the controller CTRL of the control unit via an interface not shown in Figure 3.

In case of a failure, a node ON such as the node N4 shown in Figure 1c, takes the following actions in a second configuration state: The switch OS1 switches signals coming from the optical coupler OC2 to the optical coupler OC13. By this, wrapping of the optical signals is performed. Furthermore, the controller CTRL inserts into the TDM header signal generated by the transmitter TX2 header information frames, which indicate the data frames of those optical TDM signals, that are not terminated by the receiving unit RXU1, as data frames containing dummy data. Furthermore, the switch OS1 switches signals coming from the optical coupler OC12 to the optical coupler OC3. Even furthermore, the electrical switch ES1 switches data frames from the line card LC to the transmission unit TXU1, and the switch ES2 switches data frames coming from the reception unit RXU1 to the line card LC. The different switches are configured by the controller CTRL of the control unit via an internal interface not shown in Figure 3.

The controller CTRL uses a failure notification received from another node, such as the node N5 shown in Figure 1c, for determining whether to switch from the first to the second configuration state. Alternatively, the controller CTRL uses a signal provided by an optical sensor of the node ON, not shown in Figure 3. The optical sensor receives at least a part of the optical signals behind the optical interface OIF3, for sensing whether a loss of light occurred on the backup ring or not.

In case of a failure, a node ON such as the node N5 shown in Figure 1c, takes the following actions: The switch OS1 switches signals coming from the optical coupler OC12 to the optical coupler OC3. By this, wrapping of the optical signals is performed. Furthermore, the controller CTRL inserts into the TDM header signal generated by the transmitter TX1 header information frames, which indicate the data frames of those optical TDM signals, that are not terminated by the receiving unit RXU2, as data frames containing dummy data. Furthermore, the switch OS11 switches signals coming from the optical coupler OC2 to the optical coupler OC13. Even furthermore, the electrical switch ES1 switches data frames from the line card LC to the transmission unit TXU2, and the switch ES2 switches data frames coming from the reception unit RXU2 to the line card LC. The different switches are configured by the controller CTRL of the control unit via on interface not shown in Figure 3.

The controller CTRL uses a failure notification received from another node, such as the node N4 shown in Figure 1c, for determining whether to switch from the first to the second configuration state. Alternatively, the controller CTRL uses a signal provided by an optical sensor of the node ON, not shown in Figure 3. The optical sensor receives at least a part of the optical signals behind the optical interface OIF1, for sensing whether a loss of light occurred on the primary ring or not.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the Figure 3., including any functional blocks labeled as "control unit" or "controller", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "control unit" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any electrical switches shown in the Figure 3 are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention.

## Claims

1. Method of optical data transmission,
wherein a number of optical network elements (H, N1, ..., N5) are connected by a first optical ring (PR) and a second optical ring (BR),
comprising, at an optical network node (N4),
- receiving, on said first optical ring (PR) from a first optical network element (N3) in a first transmission direction,
∘ a number of N optical time division multiplex (TDM) signals carrying N respective TDM data signals at respective N wavelengths, wherein said TDM data signals are divided into timeslots containing data frames, and
∘ a further optical TDM signal carrying a TDM header signal at a further wavelength, wherein said TDM header signal is divided into timeslots containing header information frames,
- terminating said further optical TDM signal, recovering said TDM header signal, generating a new TDM header signal and generating a new further optical TDM signal at said further wavelength,
- terminating M of said N optical TDM signals at their respective M wavelengths, wherein M is a number smaller than N, using said header information frames of said recovered TDM header signal,
- generating M new optical TDM signals at said respective M wavelengths, comprising furthermore, at said optical network node (N4), in a first configuration state,
- transmitting said M new optical TDM signals and said new further optical TDM signal on said first optical ring (PR) to a second optical network element (N5) in said first transmission direction,
- upon detecting a transmission failure located between said optical network node (N4) and said second network element (N5) or located at said second network element (N5), switching from said first configuration state to a second configuration state,
**characterized by**, at said optical network node (N4), in said second configuration state,
- inserting into said new TDM header signal header information frames, indicating that data frames of the remaining N-M optical TDM signals contain dummy data,
- transmitting said M new optical TDM signals, said remaining N-M optical TDM signals and said new further optical TDM signal on said second optical ring (BR) to said first network element (N3) in a second transmission direction opposite to said first transmission direction.

2. Method according to claim 1,
comprising furthermore, at said optical network node (N4), in said first configuration state,
- transmitting said remaining N-M optical TDM signals on said first optical ring (PR) in said first transmission direction without terminating said remaining N-M optical TDM signals.

3. Method according to claim 1 or 2,
comprising furthermore, at said optical network node (N4), in said second configuration state,
- delaying said M new optical TDM signals and said remaining N-M optical TDM signals.

4. Method according to any of the claims 1 to 3,
comprising furthermore, at said optical network node (N4), in said second configuration state,
- inserting into a TDM data signal of one of said M new optical TDM signals a data frame.

5. Method according to any of the claims 1 to 4,
wherein said optical network node (N4) is a first network node,
comprising furthermore, at a second network node (N5), in a first configuration state of said second network node (N5),
- receiving, on said first optical ring (PR) from a third optical network element (N4) in a first transmission direction,
∘ a number of N second optical time division multiplex (TDM) signals, and
∘ a second further optical TDM signal,
- upon detecting a transmission failure located between said second optical network node (N5) and said third network element (N4) or located at said third network element (N4), switching from said first configuration state of said second network node (N5) to a second configuration state of said second network node (N5),
comprising furthermore, at said second optical network node (N5), in said second configuration state of said second network node (N5),
- receiving, on said second optical ring (BR) from a fourth optical network element (H) in said second transmission direction,
∘ a number of N third optical time division multiplex (TDM) signals carrying N respective third TDM data signals at respective N wavelengths, wherein said third TDM data signals are divided into timeslots containing data frames, and
o a third further optical TDM signal carrying a third TDM header signal at said further wavelength, wherein said third TDM header signal is divided into timeslots containing header information frames,
- terminating said third further optical TDM signal, recovering said third TDM header signal, generating a new third TDM header signal and generating a new third further optical TDM signal at said further wavelength,
- terminating K of said N third optical TDM signals at their respective K wavelengths, wherein K is a number smaller than N, using said header information frames of said recovered third TDM header signal,
- generating K new third optical TDM signals at said respective K wavelengths,
- inserting in said new third TDM header signal header information frames, indicating that data frames of the remaining N-K third optical TDM signals contain dummy data,
- transmitting said K new third optical TDM signals, said remaining N-K third optical TDM signals and said new further third optical TDM signal on said first optical ring (PR) to said fourth optical network element (H) in said first transmission direction.

6. Method according to claim 5,
comprising furthermore, at said second optical network node (N5), in said second configuration state,
- transmitting said remaining N-K third optical TDM signals on said first optical ring (PR) in said first transmission direction without terminating said remaining N-K third optical TDM signals.

7. Method according to claim 5 or 6,
comprising furthermore, at said second optical network node (N5), in said second configuration state,
- delaying said K new third optical TDM signals and said remaining N-K third optical TDM signals.

8. Optical network node (N4), comprising
comprising, a first chain of optical devices (C1), connecting said node to a first optical ring (PR), and a second chain of optical devices (C2), connecting said node to a second optical ring (BR),
wherein said first chain of optical devices (C1) contains an optical switch (OS1) connecting said second chain of optical devices (C2) with said first chain of optical devices (C1), and wherein said second chain of optical devices (C2) contains an optical switch (OS11) connecting said first chain of optical devices (C1) with said second chain of optical devices (C2),
wherein said first chain of optical devices (C1) is adapted to
- receive, on said first optical ring (PR) in a first transmission direction,
∘ a number of N optical time division multiplex (TDM) signals carrying N respective TDM data signals at respective N wavelengths, wherein said TDM data signals are divided into timeslots containing data frames, and
∘ a further optical TDM signal carrying a TDM header signal at a further wavelength, wherein said TDM header signal is divided into timeslots containing header information frames,
comprising furthermore, at least one control unit (CU), adapted to
- terminate said further optical TDM signal, recovering said TDM header signal, generating a new TDM header signal and generating a new further optical TDM signal at said further wavelength,
- terminate M of said N optical TDM signals at their respective M wavelengths, wherein M is a number smaller than N, using said header information frames of said recovered TDM header signal,
- generate M new optical TDM signals at said respective M wavelengths, wherein said control unit (CU) is furthermore adapted to configure said first chain of optical devices (C1), in a first configuration state, such that,
- said M new optical TDM signals and said new further optical TDM signal are transmitted on said first optical ring (PR) in said first transmission direction, and such that,
- upon detecting a transmission failure located between said optical network node (N4) and a network element (N5) directly previous to said optical network node (N4) in said first transmission direction or located at the previous network element (N5), said optical node (N4) switches from said first configuration state to a second configuration state,
**characterized in that** said control unit (CU) is furthermore adapted to configure said chains of optical devices (C1, C2), in said second configuration state, such that,
- header information frames are inserted into said new TDM header signal, indicating that data frames of the remaining N-M optical TDM signals contain dummy data, and such that
- said M new optical TDM signals, said remaining N-M optical TDM signals and said new further optical TDM signal are transmitted on said second optical ring (BR) in a second transmission direction opposite to said first transmission direction.

## Patentansprüche

1. Verfahren zur optischen Datenübertragung,
wobei eine Anzahl von optischen Netzwerkelementen (H, N1, ..., N5) über einen ersten optischen Ring (PR) und einen zweiten optischen Ring (BR) verbunden sind,
umfassend, an einem optischen Netzwerkknoten (N4),
- Empfangen, auf dem besagten ersten optischen Ring (PR) von einem ersten optischen Netzwerkelement (N3) in einer ersten Übertragungsrichtung,
∘ einer Anzahl von N optischen Zeitmultiplex- bzw. TDM-Signalen, welche N jeweilige TDM-Datensignale bei jeweiligen N Wellenlängen transportieren, wobei die besagten TDM-Datensignale in Zeitschlitze, welche Datenrahmen enthalten, unterteilt werden, und
∘ eines weiteren optischen TDM-Signals, welches ein TDM-Header-Signal bei einer weiteren Wellenlänge transportiert, wobei das besagte TDM-Header-Signal in Zeitschlitze, welche Header-Informationsrahmen enthalten, unterteilt wird,
- Beenden des besagten weiteren optischen TDM-Signals, Rückgewinnen des besagten TDM-Header-Signals, Erzeugen eines neuen TDM-Header-Signals und Erzeugen eines neuen weiteren optischen TDM-Signals bei der besagten weiteren Wellenlänge,
- Beenden von M der besagten N optischen TDM-Signale bei deren jeweiligen M Wellenlängen, wobei M eine Zahl kleiner als N ist, unter Verwendung der besagten Header-Informationsrahmen des besagten rückgewonnenen TDM-Header-Signals,
- Erzeugen von M neuen optischen TDM-Signalen bei den besagten jeweiligen M Wellenlängen,
weiterhin umfassend, an dem besagten optischen Netzwerkknoten (N4), in einem ersten Konfigurationszustand,
- Übertragen der besagten M neuen optischen TDM-Signale und des besagten neuen weiteren optischen TDM-Signals auf dem ersten optischen Ring (PR) an ein zweites optisches Netzwerkelement (N5) in der besagten ersten Übertragungsrichtung,
- Nach Erkennen eines zwischen dem besagten optischen Netzwerkknoten (N4) und dem besagten zweiten Netzwerkelement (N5) oder an dem besagten zweiten Netzwerkelement (N5) aufgetretenen Übertragungsfehlers, Umschalten von dem besagten ersten Konfigurationszustand in einen zweiten Konfigurationszustand,
gekennzeichnet, an dem besagten optischen Netzwerkknoten (N4), in dem besagten zweiten Konfigurationszustand, durch:
- Einfügen, in das besagte neue TDM-Header-Signal, von Header-Informationsrahmen, welche angeben, dass Datenrahmen der restlichen N-M optischen TDM-Signale Fülldaten enthalten,
- Übertragen der besagten M neuen optischen TDM-Signale, der besagten restlichen N-M optischen TDM-Signale und des besagten neuen weiteren optischen TDM-Signals auf dem besagten zweiten optischen Ring (BR) an das besagte erste Netzwerkelement (N3) in einer der besagten ersten Übertragungsrichtung entgegengesetzten zweiten Übertragungsrichtung.

2. Verfahren nach Anspruch 1,
weiterhin umfassend, an dem besagten optischen Netzwerkknoten (N4) in dem besagten ersten Konfigurationszustand,
- Übertragen der besagten restlichen N-M optischen TDM-Signale auf dem besagten ersten optischen Ring (PR) in der besagten ersten Übertragungsrichtung ohne Beenden der besagten restlichen N-M optischen TDM-Signale.

3. Verfahren nach Anspruch 1 oder 2,
weiterhin umfassend, an dem besagten optischen Netzwerkknoten (N4) in dem besagten zweiten Konfigurationszustand,
- Verzögern der besagten M neuen optischen TDM-Signale und der besagten restlichen N-M optischen TDM-Signale.

4. Verfahren nach einem beliebigen der Ansprüche 1 bis 3,
weiterhin umfassend, an dem besagten optischen Netzwerkknoten (N4) in dem besagten zweiten Konfigurationszustand,
- Einfügen eines Datenrahmens in ein TDM-Datensignal eines der besagten M neuen optischen TDM-Signale.

5. Verfahren nach einem beliebigen der Ansprüche 1 bis 4,
wobei der besagte optische Netzwerkknoten (N4) ein erster Netzwerkknoten ist,
weiterhin umfassend, einem zweiten Netzwerkknoten (N5) in einem ersten Konfigurationszustand des besagten zweiten Netzwerkknotens (N5),
- Empfangen, auf dem besagten ersten optischen Ring (PR) von einem dritten optischen Netzwerkelement (N4) in einer ersten Übertragungsrichtung,
∘ einer Anzahl von N zweiten optischen Zeitmultiplex- bzw. TDM-Signalen, und
∘ eines zweiten weiteren optischen TDM-Signals,
- nach Erkennen eines zwischen dem besagten zweiten optischen Netzwerkknoten (N5) und dem besagten dritten Netzwerkelement (N4) oder an dem besagten dritten Netzwerkelement (N4) aufgetretenen Übertragungsfehlers, Umschalten von dem besagten ersten Konfigurationszustand des besagten zweiten Netzwerkknotens (N5) in einen zweiten Konfigurationszustand des besagten zweiten Netzwerkknotens (N5),
weiterhin umfassend, an dem besagten zweiten optischen Netzwerkknoten (N5) in dem besagten zweiten Konfigurationszustand des besagten zweiten Netzwerkknotens (N5),
- Empfangen, auf dem besagten zweiten optischen Ring (BR) von einem vierten optischen Netzwerkelement (H) in der besagten zweiten Übertragungsrichtung,
∘ einer Anzahl von N dritten optischen Zeitmultiplex- bzw. TDM-Signalen, welche N jeweilige dritte TDM-Datensignale bei jeweiligen N Wellenlängen transportieren, wobei die besagten dritten TDM-Datensignale in Zeitschlitze, welche Datenrahmen enthalten, unterteilt werden, und
∘ eines dritten weiteren optischen TDM-Signals, welches ein drittes TDM-Header-Signal bei der besagten weiteren Wellenlänge transportiert, wobei das besagte dritte TDM-Header-Signal in Zeitschlitze, welche Header-Informationsrahmen enthalten, unterteilt wird,
- Beenden des besagten dritten weiteren optischen TDM-Signals, Rückgewinnen des besagten dritten TDM-Header-Signals, Erzeugen eines neuen dritten TDM-Header-Signals und Erzeugen eines neuen dritten weiteren optischen TDM-Signals bei der besagten weiteren Wellenlänge,
- Beenden von K der besagten N dritten optischen TDM-Signale bei deren jeweiligen K Wellenlängen, wobei K eine Zahl kleiner als N ist, unter Verwendung der besagten Header-Informationsrahmen des besagten rückgewonnenen dritten TDM-Header-Signals,
- Erzeugen von K neuen dritten optischen TDM-Signalen bei den besagten jeweiligen K Wellenlängen,
- Einfügen, in das besagte neue dritte TDM-Header-Signal, von Header-Informationsrahmen, welche angeben, dass Datenrahmen der restlichen N-K dritten optischen TDM-Signale Fülldaten enthalten,
- Übertragen der besagten K neuen dritten optischen TDM-Signale, der besagten restlichen N-K dritten optischen TDM-Signale und des besagten neuen weiteren dritten optischen TDM-Signals auf dem besagten ersten optischen Ring (PR) an das besagte vierte optische Netzwerkelement (H) in der besagten ersten Übertragungsrichtung.

6. Verfahren nach Anspruch 5,
weiterhin umfassend, an dem besagten zweiten optischen Netzwerkknoten (N5) in dem besagten zweiten Konfigurationszustand,
- Übertragen der besagten restlichen N-K dritten optischen TDM-Signale auf dem besagten ersten optischen Ring (PR) in der besagten ersten Übertragungsrichtung ohne Beenden der besagten restlichen N-K dritten optischen TDM-Signale.

7. Verfahren nach Anspruch 5 oder 6,
weiterhin umfassend, an dem besagten zweiten optischen Netzwerkknoten (N5) in dem besagten zweiten Konfigurationszustand,
- Verzögern der besagten K neuen dritten optischen TDM-Signale und der besagten restlichen N-K dritten optischen TDM-Signale.

8. Optischer Netzwerkknoten (N4), umfassend
eine erste Kette von optischen Vorrichtungen (C1), welche den besagten Knoten mit einem ersten optischen Ring (PR) verbinden, und eine zweite Kette von optischen Vorrichtungen (C2), welche den besagten Knoten mit einem zweiten optischen Ring (BR) verbinden,
wobei die erste Kette von optischen Vorrichtungen (C1) einen optischen Schalter (OS1) enthält, welcher die besagte zweite Kette von optischen Vorrichtungen (C2) mit der besagten ersten Kette von optischen Vorrichtungen (C1) verbindet, und wobei die besagte zweite Kette von optischen Vorrichtungen (C2) einen optischen Schalter (OS11) enthält, weicher die besagte erste Kette von optischen Vorrichtungen (C1) mit der besagten zweiten Kette von optischen Vorrichtungen (C2) verbindet,
wobei die besagte erste Kette von optischen Vorrichtungen (C1) ausgelegt ist für den
- Empfang, auf dem besagten ersten optischen Ring (PR) in einer ersten Übertragungsrichtung,
∘ einer Anzahl von N optischen Zeitmultiplex- bzw. TDM-Signalen, welche N jeweilige TDM-Datensignale bei jeweiligen N Wellenlängen transportieren, wobei die besagten TDM-Datensignale in Zeitschlitze, welche Datenrahmen enthalten, unterteilt werden, und
∘ eines weiteren optischen TDM-Signals, welches ein TDM-Header-Signal bei einer weiteren Wellenlänge transportiert, wobei das besagte TDM-Header-Signal in Zeitschlitze, welche Header-Informationsrahmen enthalten, unterteilt wird,
weiterhin umfassend mindestens eine Steuereinheit (CU), ausgelegt für das
- Beenden des besagten weiteren optischen TDM-Signals, Rückgewinnen des besagten TDM-Header-Signals, Erzeugen eines neuen TDM-Header-Signals und Erzeugen eines neuen weiteren optischen TDM-Signals bei der besagten weiteren Wellenlänge,
- Beenden von M der besagten N optischen TDM-Signale bei deren jeweiligen M Wellenlängen, wobei M eine Zahl kleiner als N ist, unter Verwendung der besagten Header-Informationsrahmen des besagten rückgewonnenen TDM-Header-Signals,
- Erzeugen von M neuen optischen TDM-Signalen bei den besagten jeweiligen M Wellenlängen,
wobei die besagte Steuereinheit (CU) weiterhin dazu ausgelegt ist, die besagte erste Kette von optischen Vorrichtungen (C1) in einem ersten Konfigurationszustand derart zu konfigurieren, dass
- die besagten M neuen optischen TDM-Signale und das besagte neuen weitere optische TDM-Signal auf dem besagten ersten optischen Ring (PR) in der besagten ersten Übertragungsrichtung übertragen werden, und dass
- der besagte optische Knoten (N4) nach Erkennen eines zwischen dem besagten optischen Netzwerkknoten (N4) und einem Netzwerkelement (N5), welches dem besagten optischen Netzwerkknoten (N4) in der besagten ersten Übertragungsrichtung direkt vorausgeht, oder an dem vorausgehenden Netzwerkelement (N5) aufgetretenen Übertragungsfehlers, von dem besagten ersten Konfigurationszustand in einen zweiten Konfigurationszustand umschaltet,
**dadurch gekennzeichnet, dass** die besagte Steuereinheit (CU) weiterhin dazu ausgelegt ist, die besagten Ketten von optischen Vorrichtungen (C1, C2) in dem besagten zweiten Konfigurationszustand derart zu konfigurieren, dass
- Header-Informationsrahmen in das besagte neue TDM-Header-Signal eingefügt werden, welche angeben, dass Datenrahmen der restlichen N-M optischen TDM-Signale Fülldaten enthalten, und dass
- die besagten M neuen optischen TDM-Signale, die besagten restlichen N-M optischen TDM-Signale und das besagte neue weitere optische TDM-Signal auf dem besagten zweiten optischen Ring (BR) in einer der besagten ersten Übertragungsrichtung entgegengesetzten zweiten Übertragungsrichtung übertragen werden.

## Revendications

1. Procédé de transmission de données optiques,
dans lequel plusieurs éléments de réseau optique (H, N1, ..., N5) sont connectés au moyen d'un premier anneau optique (PR) et d'un deuxième anneau optique (BR),
comprenant, au niveau d'un noeud de réseau optique (N4), les étapes suivantes
- recevoir, sur ledit premier anneau optique (PR) à partir d'un premier élément de réseau optique (N3) dans un premier sens de transmission,
∘ un nombre de N signaux optiques multiplexés par répartition dans le temps (TDM) acheminant N signaux de données TDM respectifs à N longueurs d'onde respectives, dans lequel lesdits signaux de données TDM sont divisés en créneaux temporels contenant des trames de données, et
∘ un autre signal optique TDM acheminant un signal d'en-tête TDM à une autre longueur d'onde, dans lequel ledit signal d'en-tête TDM est divisé en créneaux temporels contenant des trames d'informations d'en-tête,
- terminer ledit autre signal optique TDM, récupérer ledit signal d'en-tête TDM, générer un nouveau signal d'en-tête TDM et générer un nouvel autre signal optique TDM à ladite autre longueur d'onde,
- terminer M desdits N signaux optiques TDM à leurs M longueurs d'onde respectives, dans lequel M est un nombre inférieur à N, au moyen desdites trames d'informations d'en-tête dudit signal d'en-tête TDM récupéré,
- générer M nouveaux signaux optiques TDM auxdites M longueurs d'onde respectives,
comprenant en outre, au niveau dudit noeud de réseau optique (N4), dans un premier état de configuration, les étapes suivantes
- transmettre lesdits M nouveaux signaux optiques TDM et ledit nouvel autre signal optique TDM sur ledit premier anneau optique (PR) à un deuxième élément de réseau optique (N5) dans ledit premier sens de transmission,
- lors de la détection d'un échec de transmission situé entre ledit noeud de réseau optique (N4) et ledit deuxième élément de réseau (N5) ou situé au niveau dudit deuxième élément de réseau (N5), passer dudit premier état de configuration à un deuxième état de configuration,
caractérisé, au niveau dudit noeud de réseau optique (N4), dans ledit deuxième état de configuration, par les étapes suivantes
- insérer dans ledit signal d'en-tête TDM des trames d'informations d'en-tête, indiquant que des trames de données des N-M signaux optiques TDM restants contiennent des données fictives,
- transmettre lesdits M nouveaux signaux optiques TDM, lesdits N-M signaux optiques TDM restants et ledit nouvel autre signal optique TDM sur ledit deuxième anneau optique (BR) audit premier élément de réseau (N3) dans un deuxième sens de transmission opposé audit premier sens de transmission.

2. Procédé selon la revendication 1,
comprenant en outre, au niveau dudit noeud de réseau optique (N4), dans ledit premier état de configuration, l'étape suivante
- transmettre lesdits N-M signaux optiques TDM restants sur ledit premier anneau optique (PR) dans ledit premier sens de transmission sans terminer lesdits N-M signaux optiques TDM restants.

3. Procédé selon la revendication 1 ou 2,
comprenant en outre, au niveau dudit noeud de réseau optique (N4), dans ledit deuxième état de configuration, l'étape suivante
- retarder lesdits M nouveaux signaux optiques TDM et lesdits N-M signaux optiques TDM restants.

4. Procédé selon l'une quelconque des revendications 1 à 3,
comprenant en outre, au niveau dudit noeud de réseau optique (N4), dans ledit deuxième état de configuration, l'étape suivante
- insérer dans un signal de données TDM d'un desdits M nouveaux signaux optiques TDM une trame de données.

5. Procédé selon l'une quelconque des revendications 1 à 4,
dans lequel ledit noeud de réseau optique (N4) est un premier noeud de réseau,
comprenant en outre, au niveau d'un deuxième noeud de réseau (N5), dans un premier état de configuration dudit deuxième noeud de réseau (N5), l'étape suivante
- recevoir, sur ledit premier anneau optique (PR) à partir d'un troisième élément de réseau optique (N4) dans un premier sens de transmission,
∘ un nombre de N deuxièmes signaux optiques multiplexés par répartition dans le temps (TDM), et
∘ un deuxième autre signal optique TDM,
- lors de la détection d'un échec de transmission situé entre ledit deuxième noeud de réseau optique (N5) et ledit troisième élément de réseau (N4) ou situé au niveau dudit troisième élément de réseau (N4), passer dudit premier état de configuration dudit deuxième noeud de réseau (N5) à un deuxième état de configuration dudit deuxième noeud de réseau (N5),
comprenant en outre, au niveau dudit deuxième noeud de réseau optique (N5), dans ledit deuxième état de configuration dudit deuxième noeud de réseau (N5), les étapes suivantes
- recevoir, sur ledit deuxième anneau optique (BR) à partir d'un quatrième élément de réseau optique (H) dans ledit deuxième sens de transmission,
∘ un nombre de N troisièmes signaux optiques multiplexés par répartition dans le temps (TDM) acheminant N troisièmes signaux de données TDM respectifs à N longueurs d'onde respectives, dans lequel lesdits troisièmes signaux de données TDM sont divisés en créneaux temporels contenant des trames de données, et
∘ un troisième autre signal optique TDM acheminant un troisième signal d'en-tête TDM à ladite autre longueur d'onde, dans lequel ledit troisième signal d'en-tête TDM est divisé en créneaux temporels contenant des trames d'informations d'en-tête,
- terminer ledit troisième autre signal optique TDM, récupérer ledit troisième signal d'en-tête TDM, générer un nouveau troisième signal d'en-tête TDM et générer un nouveau troisième autre signal optique TDM à ladite autre longueur d'onde,
- terminer K desdits N troisièmes signaux optiques TDM à leurs K longueurs d'onde respectives, dans lequel K est un nombre inférieur à N, au moyen desdites trames d'informations d'en-tête dudit troisième signal d'en-tête TDM récupéré,
- générer K nouveaux troisièmes signaux optiques TDM auxdites K longueurs d'onde respectives,
- insérer dans ledit nouveau troisième signal d'en-tête TDM des trames d'informations d'en-tête, indiquant que des trames de données des N-K troisièmes signaux optiques TDM restants contiennent des données fictives,
- transmettre lesdits K nouveaux troisièmes signaux optiques TDM, lesdits N-K troisièmes signaux optiques TDM restants et ledit nouvel autre troisième signal optique TDM sur ledit premier anneau optique (PR) audit quatrième élément de réseau optique (H) dans ledit premier sens de transmission.

6. Procédé selon la revendication 5,
comprenant en outre, au niveau dudit deuxième noeud de réseau optique (N5), dans ledit deuxième état de configuration, l'étape suivante
- transmettre lesdits N-K troisièmes signaux optiques TDM restants sur ledit premier anneau optique (PR) dans ledit premier sens de transmission sans terminer lesdits N-K troisièmes signaux optiques TDM restants.

7. Procédé selon la revendication 5 ou 6,
comprenant en outre, au niveau dudit deuxième noeud de réseau optique (N5), dans ledit deuxième état de configuration, l'étape suivante
- retarder lesdits K nouveaux troisièmes signaux optiques TDM et lesdits N-K troisièmes signaux optiques TDM restants.

8. Noeud de réseau optique (N4),
comprenant, une première chaîne de dispositifs optiques (C1), connectant ledit noeud à un premier anneau optique (PR), et une deuxième chaîne de dispositifs optiques (C2), connectant ledit noeud à un deuxième anneau optique (BR),
dans lequel ladite première chaîne de dispositifs optiques (C1) contient un commutateur optique (OS1) connectant ladite deuxième chaîne de dispositifs optiques (C2) à ladite première chaîne de dispositifs optiques (C1), et dans lequel ladite deuxième chaîne de dispositifs optiques (C2) contient un commutateur optique (OS11) connectant ladite première chaîne de dispositifs optiques (C1) à ladite deuxième chaîne de dispositifs optiques (C2),
dans lequel ladite première chaîne de dispositifs optiques (C1) est adaptée pour
- recevoir, sur ledit premier anneau optique (PR) dans un premier sens de transmission,
∘ un nombre de N signaux optiques multiplexés par répartition dans le temps (TDM) acheminant N signaux de données TDM respectifs à N longueurs d'onde respectives, dans lequel lesdits signaux de données TDM sont divisés en créneaux temporels contenant des trames de données, et,
∘ un autre signal optique TDM acheminant un signal d'en-tête TDM à une autre longueur d'onde, dans lequel ledit signal d'en-tête TDM est divisé en créneaux temporels contenant des trames d'informations d'en-tête,
comprenant en outre, au moins une unité de commande (CU), adaptée pour
- terminer ledit autre signal optique TDM, récupérer ledit signal d'en-tête TDM, générer un nouveau signal d'en-tête TDM et générer un nouvel autre signal optique TDM à ladite autre longueur d'onde,
- terminer M desdits N signaux optiques TDM à leurs M longueurs d'onde respectives, dans lequel M est un nombre inférieur à N, au moyen desdites trames d'informations d'en-tête dudit signal d'en-tête TDM récupéré,
- générer M nouveaux signaux optiques TDM auxdites M longueurs d'onde respectives,
dans lequel ladite unité de commande (CU) est en outre adaptée pour configurer ladite première chaîne de dispositifs optiques (C1), dans un premier état de configuration, de sorte que,
- lesdits M nouveaux signaux optiques TDM et ledit nouvel autre signal optique TDM soient transmis sur ledit premier anneau optique (PR) dans ledit premier sens de transmission, et de sorte que,
- lors de la détection d'un échec de transmission situé entre ledit noeud de réseau optique (N4) et un élément de réseau (N5) directement antérieur audit noeud de réseau optique (N4) dans ledit premier sens de transmission ou situé au niveau de l'élément de réseau antérieur (N5), ledit noeud optique (N4) passe dudit premier état de configuration à un deuxième état de configuration,
**caractérisé en ce que** ladite unité de commande (CU) est en outre adaptée pour configurer lesdites chaînes de dispositifs optiques (C1, C2), dans ledit deuxième état de configuration, de sorte que,
- des trames d'informations d'en-tête soient insérées dans ledit nouveau signal d'entête TDM, indiquant que des trames de données des N-M signaux optiques TDM restants contiennent des données fictives, et de sorte que
- lesdits M nouveaux signaux optiques TDM, lesdits N-M signaux optiques TDM restants et ledit nouvel autre signal optique TDM soient transmis sur ledit deuxième anneau optique (BR) dans un deuxième sens de transmission opposé audit premier sens de transmission.
